# FASCICULE DE BREVET EUROPEEN

(11) **EP 4 075 967 B1**
(45) Date de publication et mention de la délivrance du brevet: **15.11.2023**
(21) Numéro de dépôt: 20842253.5
(22) Date de dépôt: 16.12.2020
(51) Int. Cl.: A01M 1/20, A01M 29/12, A01K 13/00, B05B 17/00, B05B 17/06

(54) **DISPOSITIF PIEZOELECTRIQUE POUR LA DIFFUSION CIBLEE DE MATIERE ACTIVE**
PIEZOELEKTRISCHES GERÄT ZUR ZIELGERICHTETEN VERBREITUNG VON AKTIVEN SUBSTANZEN
PIEZOELECTRIC DEVICE FOR THE TARGETED DISTRIBUTION OF ACTIVE SUBSTANCES

(30) Priorité: 16.12.2019 FR 1914539
(43) Date de publication de la demande: 26.10.2022
(73) Titulaire: AB7 Santé, 31450 Deyme (FR)
(72) Inventeur: CALMET, Christophe, 31520 RAMONVILLE SAINT AGNE (FR); NGUYEN, David, 31400 TOULOUSE (FR); VILBERT, Arnaud, 31450 BAZIEGE (FR)
(86) Numéro de dépôt international: PCT/FR2020/000277
(87) Numéro de publication internationale: WO 2021/123518

(56) Documents cités:
- EP-A2- 0 897 755
- WO-A1-00/51747
- WO-A2-2008/008459
- FR-A1- 2 625 646
- FR-A1- 2 879 482
- US-A- 4 627 385
- US-A1- 2018 303 066

## Description

L'invention se situe dans le domaine des dispositifs de diffusions, et plus particulièrement des dispositifs de diffusions aérosols de type nébuliseur ultrasonique dont la vibration à haute fréquence d'oscillation permet la diffusion d'au moins un actif. L'invention concerne plus particulièrement un dispositif équipé d'un système de diffusion de type piézoélectrique pouvant fonctionner de façon multidirectionnelle, même en cas de mouvements du sujet sur lequel le dispositif est fixé.

De nombreux dispositifs de diffusion de substances actives existent sur le marché. La plupart de ces dispositifs sont des dispositifs « passifs » qui ne requièrent seulement que le mouvement de l'air ambiant afin de disperser un liquide dans l'environnement proche. D'autres appareils sont alimentés électriquement par une batterie ou via une prise d'alimentation électrique, ce dernier cas nécessite toutefois une alimentation par câble et est ainsi uniquement destiné au foyer, ou au mieux à l'habitacle d'un véhicule.

D'autres dispositifs de diffusion utilisent un transducteur ultrasonique afin de pulvériser une solution liquide d'actifs dans l'air, cependant il n'existe pas à ce jour de dispositif piézoélectrique destiné à être porté de façon nomade afin de traite un sujet à l'aide d'agents actifs, notamment répulsifs, apaisants, antibactériens ou antiseptiques, et ce même en cas de déplacement ou de mouvement du sujet.

L'état de l'art fait état de dispositifs de diffusion qui fonctionnent par chauffage notamment pour les prises murales. Ces derniers présentent l'inconvénient d'altérer les actifs les plus sensibles à la température, c'est notamment le cas des huiles essentielles. Pour abaisser la température d'utilisation des prises murales, il est connu de formuler les actifs avec des solvants, dont notamment ceux de type naphta très volatile. Cela a pour conséquence d'une part de diluer le traitement, d'autre part de libérer un solvant organique dans l'environnement potentiellement toxique et inflammable, ce qui est non souhaitable.

Dans les dispositifs pour animaux, le traitement répulsif se fait le plus souvent par l'utilisation de matrice polymère susceptible de libérer des substances ayant cet effet, ou encore par l'application de formulation pour pipette de type « spot-on », de shampoing ou de lotions à des fins anti-parasitaires par exemple. Les concentrations en actifs au sein des matrices polymères ont tendance à diminuer dans le temps, le dosage et la diffusion d'un actif ne sont donc pas linéaires pendant toute la durée d'utilisation. Les actifs dits apaisants, antibactériens ou antiseptiques, sont quant à eux réservés dans la majorité des cas à des diffuseurs thermiques qui vaporisent l'actif dans l'air ambiant environnant, ceci convenant alors très bien aux animaux d'appartements. Mais dans le cadre d'une application d'actifs répulsifs et/ou apaisants, il n'existe pas de solution pratique permettant d'allier les caractéristiques d'une nébulisation d'une solution d'actifs à l'aspect d'un traitement ciblé et localisé des applications préexistantes.

Parmi les solutions localisées, on connaît des dispositifs aérosols pneumatiques, mais ces derniers ne sont pas forcément les plus adaptés car l'actif est libéré via des gaz propulseurs qui peuvent être inflammables voire toxiques à haute dose. De façon similaire au cas des matrices polymères, un autre inconvénient réside en ce que la quantité d'actif diffusé ne reste pas constante dans la durée d'utilisation du dispositif aérosol. En effet, le gaz propulseur diminue et entraine de moins en moins d'actif au fur et à mesure du nombre des utilisations. De plus, les dispositifs aérosols pneumatiques exigent une dilution des actifs incorporés, limitant donc la concentration utilisable et par conséquent, l'efficacité.

Parmi les diffuseurs portés par un animal, on peut citer notamment les brevets US4627385, US8714113 et US5927233 qui décrivent des boîtiers destinés à être fixés sur un collier pour dissuader un chien d'aboyer. Pour ce faire, le diffuseur est capable de délivrer, en réponse au bruit de l'aboiement, un choc électrique via des électrodes, ou bien des signaux sonores, ou encore un signal olfactif obtenu par la pulvérisation d'huile essentielle de citronnelle stockée dans un réservoir intégré dans le boîtier. Le réservoir est pourvu d'une électrovanne dont l'ouverture est commandée électroniquement. Ces brevets ne divulguent ni ne suggèrent la fixation d'un système piézoélectrique sur un sujet en mouvement, en vue d'une utilisation dans le traitement dudit sujet, contre les parasites, ou pour traiter douleur ou autre pathologie.

Concernant les dispositifs appliqués à l'animal, il est connu par la demande WO1993013730A1 des inhalateurs thérapeutiques pour bovins. Ce type d'inhalateur comporte un système de diffusion piézoélectrique couplé à un masque respiratoire capable de pulvériser des substances thérapeutiques afin de les acheminer via un tuyau reliant masque et dispositif. Il s'agit d'une méthode d'aérosolthérapie employée en cas d'urgence vitale chez l'animal concerné et qui permet d'éviter la diffusion des substances thérapeutiques dans l'air environnant. Ce système est voué à être utilisé sur l'animal en détresse respiratoire et donc immobile lors du traitement ponctuel. Ce document ne divulgue aucunement une utilisation d'un dispositif piézoélectrique destiné à être fixé sur un dispositif destiné à une utilisation à la demande chez un sujet en mouvement. De façon plus générale dans l'art antérieur, les traitements d'aérosolthérapie sont mal supportés que ce soit chez l'homme ou chez les animaux auxquels un masque contraignant doit souvent être appliqué. De plus, les systèmes d'aérosolthérapies ne permettent pas un traitement des sujets tout en restant en mouvement. Rien dans l'art antérieur n'est proposé pour améliorer et limiter les contraintes des dispositifs d'aérosolthérapies chez l'animal ou chez l'homme.

On connaît de la demande EP0897755A2 une invention qui a trait à un appareil piézo-électrique de pulvérisation de liquide et à un procédé pour repousser ou éliminer les organismes nuisibles. Le présent brevet divulgue une méthode pour éliminer et repousser les insectes en émettant dans l'air des particules d'insecticides atomisées. Le liquide est atomisé par la vibration engendrée par un signal électrique et n'a pas besoin de réservoir sous pression gaz. Cette méthode permet la réduction de la taille du système. La taille des particules atomisées est de moins de 20µm. La quantité d'ingrédients actifs atomisés est de 0.01 to 20mg/h/m3. Ce document divulgue un procédé de répulsion et d'élimination d'insectes nuisibles par nébulisation d'au moins une substance active. Les actifs peuvent être utilisés seuls ou en mélange et sont de type actif chimique. Cette demande ne divulgue pas de dispositif ultrasonique fixé à un sujet en mouvement.

Le document EP2797411B1 divulgue un dispositif d'atomisation ultrasonique comprenant un réservoir de solution contenant un ingrédient pour le contrôle de parasites choisi dans le groupe des methofluthrine. Mais ce document ne divulgue pas spécifiquement l'utilisation d'un dispositif piézoélectrique adapté et destiné à traiter un sujet en mouvement.

D'autre part, le brevet US9185884B2 divulgue un collier de contrôle pour animaux. Ce collier comporte un diffuseur d'odeur. Il ne mentionne toutefois aucun dispositif piézoélectrique ni ne fait mention de diffusion d'actifs.

Le Brevet US8741965 divulgue quant à lui une méthode de modification du comportement d'un animal, notamment lors d'un stress de manière à apaiser celui-ci. Pour cela, l'invention consiste à utiliser des phéromones apaisantes, sous forme de solution à pulvériser ou sous forme d'actif intégré à une matrice polymère susceptible d'être porté par l'animal. Mais ce document ne mentionne aucunement un dispositif piézoélectrique pour la diffusion d'actifs.

Au vu de l'art antérieur, il existe un besoin de proposer des dispositifs piézoélectriques adaptés aux sujets à traiter, permettant un traitement localisé et/ou dans une direction donnée afin de mieux cibler la zone à traiter. Par ailleurs, il existe également un besoin de proposer un dispositif pouvant fonctionner de façon multidirectionnelle, peu importe le positionnement du dispositif, permettant un fonctionnement même sur un sujet en mouvement. Par multidirectionnel, on entend un dispositif pouvant pulvériser de façon efficace un actif peu importe l'orientation du dispositif et les mouvements qui lui sont imposés. Afin d'atteindre les objectifs mentionnés, il existe donc un besoin d'alléger, de miniaturiser et d'améliorer les systèmes de pulvérisation d'actifs.

Le dispositif selon l'invention se propose de répondre à ces différents besoins.

Un autre intérêt de l'invention au regard des autres systèmes de diffusion repose sur l'emploi d'un dispositif piézoélectrique qui permet de s'affranchir des solvants potentiellement dangereux et des gaz propulseurs inflammables. Dans le cas d'actif anti-nuisible, protéger le sujet animal ou humain de toute piqure d'insecte nuisible et ce par le biais de traitements qui s'affranchissent des solvants dangereux est un objectif atteint par le dispositif selon l'invention.

Par ailleurs, le dispositif piézoélectrique selon l'invention offre la possibilité d'utiliser indifféremment des actifs purs ou dilués, offrant ainsi une possibilité d'utilisation de plages de concentrations d'actifs plus larges qu'avec les dispositifs pneumatiques de l'état de l'art. Il est ainsi plus aisé de proposer une gamme de valeur adaptée à l'efficacité recherchée. Les actifs répulsifs pourront ainsi le cas échéant être utilisés purs ou très concentrés en solution si nécessaire. De même les actifs apaisants, pourront être utilisés de façon très diluée sans en altérer la pulvérisation. Pour tout actif, le dispositif selon l'invention offre donc la possibilité d'utilisation d'une gamme de concentration allant de l'actif pur à une solution très diluée.

De plus, le système piézoélectrique selon l'invention offre l'avantage de maintenir stable la concentration d'actifs, au cours du temps et du nombre d'utilisation. Dans le cas de plaquettes anti-nuisible, et notamment au sein de bracelets anti-moustique, la plaquette va diffuser l'actif en permanence et sans maitrise précise de la durée de diffusion ni de la quantité diffusée. Dans le dispositif selon l'invention, le déclenchement de la pulvérisation se fait à la demande via le module de télécommande ou via une programmation visant à définir différents paramètres comme l'heure de déclenchement et la durée de pulvérisation.

De même, les moyens de traitements par pulvérisation connus actuellement ne permettent pas un dosage contrôlé des actifs de manière précise. Lorsqu'il s'agit de traiter un sujet humain ou animal, il peut s'avérer nécessaire de bénéficier d'un dispositif permettant une régulation précise des doses à administrer tout en permettant un traitement en mouvement et de manière localisée. Ce que permet le système piézoélectrique selon l'invention.

Dans le domaine des traitements anti-nuisible, par exemple anti-moustique, on trouve des dispositifs de type bracelets comportant des plaquettes en matrice polymère chargés en actifs. Cependant, ces plaquettes ne diffusent pas l'actif sur une zone suffisamment large pour traiter efficacement le sujet. En effet, l'efficacité reste souvent limitée à la zone proche de la plaquette, par exemples l'avant-bras lorsqu'il s'agit du port d'un bracelet. La diffusion d'un actif par pulvérisation par le biais du dispositif selon l'invention, permet de cibler une zone en dirigeant la pulvérisation dans la direction souhaitée mais également d'accroitre la surface de la zone traitée. En effet la nébulisation selon le dispositif de l'invention peut générer un brouillard traitant qui va diffuser autour du sujet et non uniquement sur une zone spécifique.

Les systèmes de diffusion piézoélectriques de l'invention permettent également de limiter les pertes d'actifs fragiles tels que les huiles essentielles notamment à cause de leur sensibilité à la chaleur. En effet lesdits dispositifs ne produisent pas de chaleur en fonctionnement et sont donc à privilégier pour les actifs thermosensibles.

La présente invention permet de remplir les objectifs susmentionnés et de palier aux inconvénients des dispositifs de l'état de l'art.

Lorsqu'un sujet à traiter est amené à se déplacer, les systèmes classiques, y compris les systèmes piézoélectriques ne permettent pas de diffuser de façon ciblée, localisée vers une zone ou une autre et ne permettent pas un fonctionnement du dispositif en mouvement et dans tous les sens. Or il est utile de pouvoir faire porter au sujet à traiter en permanence un dispositif activable quand nécessaire.

Par ailleurs dans le cas du traitement d'un homme ou d'un enfant, et notamment par exemple d'un traitement anti-moustique, il convient d'avoir la possibilité d'avoir un dispositif efficace en permanence sur le sujet mais activable en fonction des besoins.

Par ailleurs, dans tout traitement à inhaler dans le cas de traitement de maladies respiratoires, il convient de cibler la sphère Otho-Rhino-Laryngée (ORL) et disposer d'une modularité de pulvérisation, à savoir d'un dispositif portatif qui satisfasse à ces problèmes d'orientation du jet et de mobilité d'un tel dispositif.

Le but de la présente demande est de proposer un nouveau dispositif piézoélectrique, et une nouvelle application de ce dispositif chez le sujet à traiter.

Un objectif de la présente invention est de proposer un dispositif piézoélectrique, et son utilisation pour la diffusion d'actifs, qui soit capable d'atteindre efficacement les zones du corps de prédilection du traitement.

Un autre objectif est de fournir un dispositif automatisé capable de diffuser des particules refermant les matières actives d'une taille permettant la réalisation d'un nuage ou de brouillard à destination des zones d'intérêt du corps humain ou d'un animal, de façon à ce que les actifs soient en contact avec les zones à traiter ou aptes à être inhalés.

II est évident que la réalisation du dispositif selon l'invention tient compte des contraintes techniques liées à la miniaturisation, à la stabilité de l'actif dans le liquide ainsi que son efficacité sur les cibles. En effet, le port du dispositif ne doit pas gêner le sujet qui le porte.

Par conséquent, la présente invention a pour objet un dispositif rechargeable de pulvérisation d'un actif selon la revendication 1.

La présente invention concerne également l'utilisation dudit dispositif selon la revendication 6.

Par dispositif rechargeable il est entendu que le dispositif puisse, par des moyens connus de l'homme du métier, être rempli à nouveau après utilisation lorsque le réservoir est vide. Le réservoir peut, à ce titre, être inclus sous forme de cartouche à changer, ou comporter une valve de remplissage directement intégrée en surface du réservoir. Dans la suite de la demande, le réservoir du dispositif selon l'invention sera défini indifféremment comme un réservoir ou une « cartouche », ladite cartouche pourra être, de manière indifférenciée, une cartouche remplissable et réutilisable ou encore une cartouche jetable après utilisation.

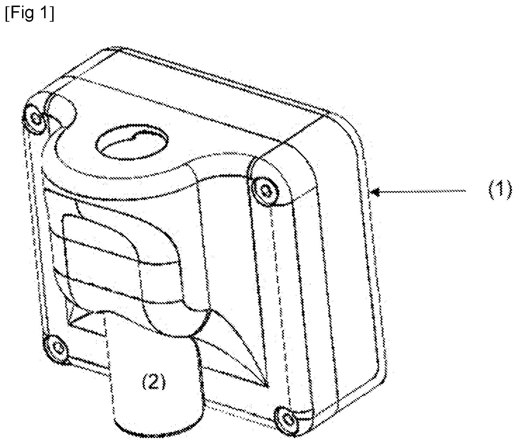

Le dispositif selon l'invention est constitué d'un corps de nébulisation (1) et d'un réservoir (2) tel que décrit à la Figure 1. Le corps de nébulisation comprend le boitier renfermant le système d'étanchéité, le système piézoélectrique, la carte électronique ainsi que la batterie alimentant le système. Dans un mode particulier, le corps de nébulisation peut être équipé d'un mécanisme d'orientation du système piézoélectrique permettant d'obtenir une pulvérisation dans des directions définies.

Le mécanisme d'orientation de ce mode de réalisation comporte alors un mécanisme de type rotule (7) pour permettre le pivotement du système piézoélectrique autour de l'axe vertical du corps de nébulisation (1). Ce mécanisme permet non seulement d'orienter de manière plus précise la nébulisation vers les zones ciblées mais il permet également de sécuriser les risques d'épanchement accidentels du liquide contenu dans le réservoir (2) du dispositif lors des mouvements, ce qui contribue également à renforcer l'étanchéité du système. L'utilisation d'une telle rotule pour le mécanisme d'orientation permet également de simplifier la miniaturisation du dispositif afin de le rendre compact et plus adéquat pour qu'il puisse être utilisée sur un sujet mobile.

Le système d'orientation (7) de la pastille piézoélectrique repose sur une liaison de type rotule entre deux parties distinctes. On trouve alors une partie mobile (8') de forme sphérique ou hémisphérique, support de la pastille piézo-électrique et de son joint d'étanchéité spécifique, mais aussi une partie fixe (8) préférentiellement de forme hémisphérique, constituant le châssis dans lequel est enchâssée la partie mobile pour permettre la rotation de cette dernière afin d'orienter la nébulisation en sortie du dispositif.

L'angle et la direction du traitement sont définis par ledit mécanisme et dépendent de l'application visée. L'angle d'orientation maximal de la pastille (6) par le système d'orientation (7) est de 45°C par rapport à l'axe de la mèche (4 ou 4') et ceci dans toutes les directions. L'inclinaison de la pastille sur la mèche est ainsi limitée à 45° afin d'assurer le contact permanent et optimal et la mèche (4 ou 4') avec la pastille piézoélectrique (6).

Il est possible de compléter ce mécanisme par un verrouillage de l'angle, soit par un mécanisme complémentaire de crantage, soit par un traitement spécifique des surfaces en contact pour contrôler leur rugosité.

Dans un mode de réalisation où la mèche du dispositif reste à la verticale, le mécanisme d'orientation (7) de la pastille piézoélectrique (6) permet avantageusement de diriger la pulvérisation dans une direction choisie sans avoir à incliner le dispositif et par conséquent de maintenir l'imprégnation optimale de la mèche (4 ou 4') même dans le cas de réservoirs partiellement vide ou inclinés, afin d'assurer la continuité de l'alimentation en liquide jusqu'à consommation complète de ce dernier. Ce problème est fréquemment rencontré dans les dispositifs à spray munis d'un tube plongeur, qui lorsque le réservoir est vide, ne peuvent plus pulvériser lors qu'ils sont inclinés. La présente invention palie ainsi cet inconvénient, de volume mort ou accessible au tube plongeur.

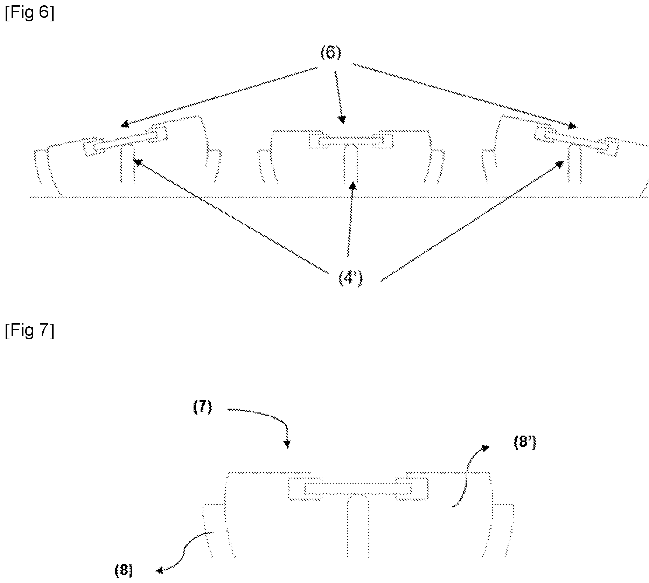

Il sera entendu que les appellations « système d'orientation de la pastille piézoélectrique », « mécanisme d'orientation de la pastille piézoélectrique » sont indifférenciées et se rapportent toutes les deux au mécanisme décrit précédemment, qui est également explicité aux FIG 6 et FIG 7 de la présente demande.

Dans un mode de réalisation préférée, le réservoir (2) est une cartouche (3) comportant une mèche (4) à imbiber, de longueur choisie en fonction de la taille du réservoir qui est assimilable à une cartouche sensiblement cylindrique. Cette mèche est insérée longitudinalement au sein de la cartouche cylindrique qui comporte une ouverture de distribution à une de ses extrémités et un fond à une autre. Il est entendu que ladite mèche (4) est en contact avec le fond de ladite cartouche cylindrique. L'ouverture de distribution comporte un diamètre inférieur au diamètre du cylindre et est prévu pour accueillir la mèche. Ladite mèche comble donc l'espace en sortie de la cartouche et dépasse de celle-ci. L'adéquation entre le diamètre de la mèche et celle de l'ouverture du réservoir permet avantageusement d'éviter les écoulements superflus et non voulus provoqués par les contraintes du mouvement et donc d'assurer une première étanchéité entre mèche et ouverture de distribution.

Préférentiellement, la mèche est souple et constituée en fibres tissées de type cellulose ou dérivés, traitée hydrophobe ou non. Dans un autre mode, la mèche peut être rigide en matériau poreux de type céramique ou plastique. L'homme du métier adaptera la nature de la mèche à celle de l'actif à véhiculer.

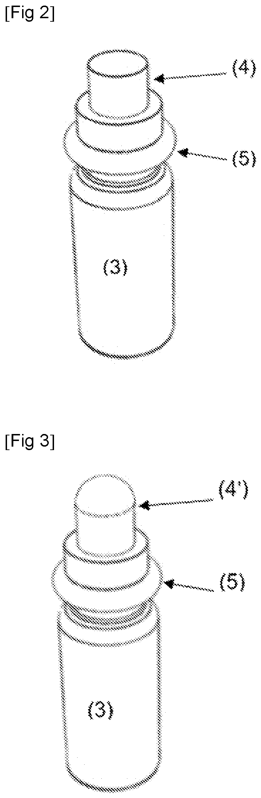

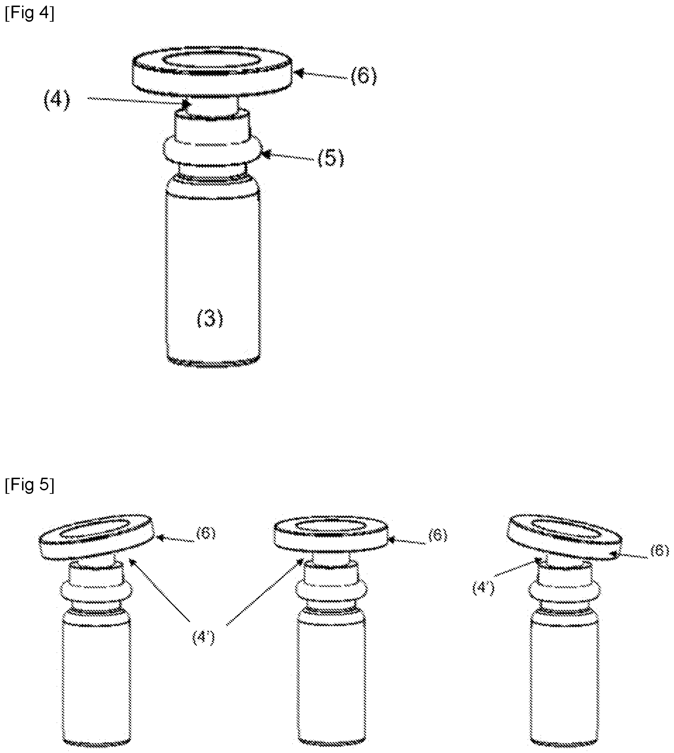

Dans le dispositif selon l'invention, la mèche est de forme cylindrique dont les extrémités sont des surfaces planes tel que décrit à la Figure 2. La pastille piézoélectrique est alors en contact avec toute la surface plane de la mèche. Dans un mode alternatif, la surface de la mèche en contact avec la pastille piézoélectrique est de forme arrondie, sous forme d'ogive ou préférentiellement hémisphérique. Dans cette variante, le dispositif selon l'invention présente l'avantage de pouvoir orienter à la demande la pastille piézoélectrique en contact avec la mèche. Par ailleurs, cette forme maintient un contact régulier avec le centre de la membrane perforée située sur la pastille piézoélectrique quel que soit l'orientation de cette dernière. Ceci permet un approvisionnement du liquide vers la cellule piézoélectrique constant et en quantité suffisante tout en diminuant les tensions sur la pastille, composante fragile du système. Par cette variante, le dispositif permet de modifier l'orientation de la pastille piézoélectrique et donc de définir une direction spécifique choisie pour la pulvérisation en fonction de l'indication (Figure 5).

Selon un mode préféré, l'étanchéité entre le réservoir (2) et le corps de nébulisation (1) est assurée par un système de joint (5) particulièrement adapté au dispositif selon l'invention. Le joint sera de préférence de forme torique, dans une matière élastique choisie parmi les matériaux comme le caoutchouc butadiène acrylonitrile, le caoutchouc fluoré, le caoutchouc fluorosilicone, le polyacrylate, le caoutchouc d'Ethylène Acrylate, le caoutchouc perfluoré, le silicone, l'EPDM, le copolymère d'Ethylène Propylène Fluoré, le polytrétrafluoroéthylène, ou le polyuréthane. Le joint sera choisi parmi ceux présentant une dureté comprise entre 50 et 100 shore A pour permettre à la fois le changement facilité de réservoir mais aussi la bonne tenue mécanique de la recharge une fois insérée. Ce système de joint prend place dans une gorge spécialement adaptée de manière à assurer l'étanchéité et un positionnement optimisé de la cartouche de recharge lors des sollicitations mécaniques induites lors de la recharge du dispositif ou lors des mouvements du sujet. Le dispositif piézoélectrique selon l'invention comprend ainsi plusieurs niveaux d'étanchéité, lesdits niveaux étant respectivement dûs au joint d'étanchéité entre réservoir (2) et corps de nébulisation (1) d'une part mais aussi à l'adéquation du diamètre de la mèche dans le réservoir d'autre part.

Au sens de l'invention, le réservoir ou la cartouche peuvent être constitués dans des matériaux classiquement utilisés et connus tels que le verre, le plastique ou tout autre matériau que l'homme du métier jugera adapté à l'invention.

Il est entendu que l'actif sera préalablement mis en place dans la cartouche avant l'insertion de la mèche. Celui-ci pourra alors diffuser de la cartouche vers l'ouverture de distribution en passant par la mèche par un phénomène de capillarité.

De manière avantageuse la mise en contact de l'actif avec l'élément piézo-électrique (6) se fera par transport de l'actif par capillarité le long de la mèche jusqu'à son extrémité. L'actif pourra ainsi être nébulisé sous forme de nuage de particules. Il est entendu au sens de l'invention que les particules sont des gouttelettes d'une solution liquide.

Le système piézoélectrique selon l'invention permet également une certaine modularité au niveau des concentrations d'actifs pouvant être utilisés contrairement aux systèmes pneumatiques sous pression. En effet le dispositif de la présente invention permet de manière surprenante de travailler avec des compositions très concentrées d'actifs, voire avec les actifs purs, donc sans utiliser de solvants, et ainsi de gagner en efficacité lors de l'utilisation d'actifs dose-dépendants.

Dans un mode particulier selon l'invention, l'actif est une substance formulée au sein d'une composition liquide afin qu'elle puisse entrer en contact avec le dispositif piézoélectrique dont la fréquence de vibration va permettre d'atomiser le liquide et de disperser ladite substance sous forme de nuage ou de brume.

Selon la présente invention, la composition liquide contenant l'actif est de type aqueuse, alcoolique, hydroalcoolique, huileuse ou sous forme d'émulsion, dont la nature sera adaptée à l'actif. Selon un mode de réalisation particulier, la composition est exclusivement composée de l'actif pur, sans solvant. Selon un autre mode de réalisation, l'actif est dilué au sein de la composition au moyen d'au moins un solvant.

De manière connue, les matières actives sont formulées dans un solvant approprié. Des exemples de solvants utilisables comprennent notamment des hydrocarbures aromatiques ou aliphatiques, des hydrocarbures halogénés, des alcools aromatiques ou aliphatiques, des esters, des éthers et des cétones, ou de l'eau. Plus préférentiellement, les solvants utilisables sont des triglycérides, tels les huiles végétales ou animales, ou des solvants alcooliques, tel l'éthanol.

Des adjuvants de formulation, bien connus dans le domaine, peuvent également être ajoutés tels que, par exemple, des stabilisants, des tensioactifs, des agents synergisants, des agents antimicrobiens.

Dans une variante préférée, l'actif selon la présente invention représente entre 0,01 % et 100% de la composition liquide, préférentiellement entre 0,1 % et 50 % et encore plus préférentiellement entre 0,5 % et 30%.

Selon un mode de réalisation, l'actif est choisi parmi un insecticide, un répulsif, un agent odoriférant, un antistress, un agent dynamisant, un agent anti-démangeaison, un antidouleur, un antibactérien, un antiseptique, ou un actif pour le traitement des maladies respiratoires, ou leurs mélanges.

Les insecticides et répulsifs de la présente invention sont connus de l'homme du métier, ils sont classiquement utilisés dans la lutte contre les organismes nuisibles précités. Par exemple, les insecticides et les répulsifs sont choisis notamment dans le groupe formé par des pyréthrinoïdes, des pyréthrines et leurs dérivés, des carbamates, des formamidines, des esters carboxyliques, le N,N-diéthyl-3-méthylbenzamide (DEET), des phénylpyrazoles, des composés organophosphorés, des composés organohalogénés, des néonicotinoïdes, des avermectines et leurs dérivés, des spinosynes, des huiles essentielles et leurs constituants (exemples : les terpènes et leurs dérivés (alcools, esters, aldéhydes), des sesquiterpènes et leurs dérivés (alcools, esters, aldéhydes)).

Dans une variante de réalisation préférée, l'agent actif est un répulsif ou un insecticide qui est choisi parmi les huiles essentielles telles que l'huile essentielle de lavandin, l'huile essentielle d'eucalyptus citronnée, de citronnelle, de lavande, de margousier, de menthe poivrée, de menthe verte, de menthe pouliot, de gaulthérie ou de basilic ou leurs mélanges.

Selon une variante de l'invention, les répulsifs sont choisis parmi les constituants d'huiles essentielles tels que le géraniol, le limonène, le menthol, l'alpha pinène, le linalol, le citriodiol, le citronellal ou leur mélange.

L'agent odoriférant peut être d'origine naturelle ou de synthèse et, est choisi parmi les parfums, les huiles essentielles et leurs constituants.

L'antistress ou l'agent apaisant peut être une huile végétale telle que l'huile de chanvre, notamment riche en cannabinoïdes, ou une huile essentielle telle que l'huile essentielle de valériane, de nepeta cataria, de pin, de mandarine, de bigaradier, de verveine, de ravintsara, de camomille, de lavande, de marjolaine, d'Ylang-ylang, de romarin, d'eucalyptus ou de menthe ou une phéromone ou leurs mélanges.

L'agent anti-démangeaison peut être une huile essentielle, un alcool gras, un ester, un acide gras et ses esters, des vitamines ou leurs mélanges.

L'antidouleur peut être une huile essentielle, des alcools monoterpéniques, des aldéhydes monoterpéniques, des esters monoterpéniques ou leurs mélanges. On préférera tout particulièrement l'emploi du méthyl salicylate, du menthol, de l'huile essentielle de gaulthérie, de genévrier, de menthe poivrée, d'eucalyptus citronné ou de l'huile de chanvre.

Les antibactériens et/ou antiseptiques, peuvent être des huiles essentielles, des alcools monoterpéniques, des aldéhydes monoterpéniques, des esters monoterpéniques ou des dérivés hydroalcooliques ou leurs mélanges. On préférera tout particulièrement, le lavandin, l'huile essentielle de pamplemousse, de citron, d'arbre à thé, de marjolaine, d'eucalyptus radié, de ravintsara ou leurs mélanges

Par actif pour le traitement des maladies respiratoires, on entend tout actif, qui peut traiter les pathologies des voies aériennes d'un sujet humain ou animal ou les voies nasales, telles que l'asthme, les bronchites, les pneumonies ou autres affections chroniques ou aigues. L'actif peut être choisi parmi un corticoïde, un broncho-dilatateur, un fluidifiant bronchique, un antihistaminique ou tout autre traitement adapté à la pathologie.

Selon le but recherché, dans le cadre de l'invention, les matières actives susmentionnées peuvent être utilisées seules ou en association.

Le dispositif selon l'invention est donc également composé d'un élément piézoélectrique bien connu de l'homme de l'art. A titre d'exemple, ledit dispositif comprend notamment une pastille en céramique piézoélectrique mise en contact avec la solution permettant de la nébuliser via la mèche. La pastille piézoélectrique est recouverte d'une membrane perforée dont les dimensions des perforations peuvent varier de 1 à 40 µm, préférentiellement de 3-20 µm. Lorsqu'elle est activée, la pastille vibre à une fréquence comprise entre 110 et 190 kHz. La taille des perforations et la fréquence de vibration permet de cibler une taille de particule à nébuliser selon l'invention.

Selon la présente invention, la composition liquide est pulvérisée sous forme de particules de diamètre moyen compris entre 1µm et 40µm. La taille des particules est adaptée à l'utilisation qui sera visée. Celle-ci est modulée d'une part avec la fréquence d'oscillation de vibration de la pastille piézoélectrique du dispositif selon l'invention. D'autre part, la taille des particules pulvérisées sera dépendante de la taille des microperforations de la membrane du dispositif piézoélectrique.

Selon un mode particulier, dans le cas de diffusion d'actifs contre les nuisibles, la composition de l'actif sera préférentiellement pulvérisée dans une taille de particule comprise entre 10 à 40µm, de façon plus préférentielle entre 20 à 40µm.

Dans un mode de réalisation préféré, lorsque l'actif est une solution liquide d'agents apaisants, anti-douleur ou actifs pour le traitement des pathologies respiratoires, il est nécessaire que la pulvérisation se fasse préférentiellement vers le système respiratoire du sujet à traiter afin d'atteindre l'organe cible, et de permettre l'inhalation des actifs. Il convient donc de nébuliser la solution d'actif dans un diamètre de gouttes adaptées à l'inhalation. Lesdites gouttes générées par le dispositif selon l'invention ont un diamètre compris entre 1µm et 20µm pour permettre une inhalation optimale, préférentiellement entre 1 et 10µm.

Au sens de la présente demande, les actifs purs ou les formulations contenant le ou les actifs doivent être intégrées au réservoir du dispositif tel que décrit précédemment

L'utilisation du dispositif doit pouvoir se faire sur un sujet, humain ou animal, en mouvement et dans toutes les directions. Ainsi il convient que ledit dispositif soit fixé un support de type, bracelet, patch, ceinture, harnais et qu'il puisse être amovible. Les moyens de fixations du dispositif selon l'invention sur le support sont choisis parmi un système de ruban auto-agrippant, de lacet, d'adhésif, par un système de bouton de pression, par encoche ou tout autre moyen de fixation bien connu de l'homme du métier. Dans un mode particulièrement avantageux, le moyen de fixation peut permettre de modifier l'orientation et la pulvérisation en fonction de l'effet recherché. A cet effet, il est également prévu que le dispositif selon l'invention puisse bénéficier d'un système d'attache rotative fixée au support. Dans un tel mode de réalisation particulier, les moyens de fixations sont montés sur une attache rotative clipsée au support. Le dispositif piézoélectrique sera fixé sur un support rotatif qui pourra alors assurer une diffusion des actifs à 360 degrés. Dans un mode particulier de pulvérisation d'actifs répulsifs ou insecticides, la pulvérisation est préférentiellement orientée vers le corps du sujet ou au plus proche des zones à protéger ou traiter. Dans le cas d'apaisant, et/ou d'anti douleur, la pulvérisation sera préférentiellement dirigée vers la sphère ORL pour inhalation.

Selon la présente invention, l'utilisation du dispositif présente donc l'avantage de générer une pulvérisation dans différentes directions choisies. D'une part, le dispositif selon l'invention permet un fonctionnement dans tous les sens, indépendamment des mouvements du sujet portant le dispositif. D'autre part, le dispositif peut être orienté en fonction des zones à atteindre, notamment via son moyen de fixation qui peut être orientable. Par ailleurs l'utilisation d'une mèche à extrémité hémisphérique au sein du dispositif, permet d'orienter dans une direction donnée la pastille piézoélectrique en contact avec ladite mèche. Cette possibilité est avantageusement conférée par le mécanisme d'orientation du système piézoélectrique qui est un mécanisme de type rotule de direction (7).

Selon la présente invention, le mécanisme de pulvérisation piézoélectrique du dispositif comprend une carte électronique. Ladite carte électronique permet l'activation du système piézoélectrique. Selon un mode particulier l'activation peut se faire par un bouton poussoir directement et manuellement sur le dispositif. Dans un mode préférentiel, la carte électronique permet de contrôler et/ou de déclencher la pulvérisation à distance. Dans un mode particulier, le déclenchement est réalisé par le biais d'une programmation, pouvant définir les jours et/ou heures et/ou temps de pulvérisation. Dans une autre variante, le déclenchement est réalisé à la demande par l'intermédiaire d'une télécommande. L'homme du métier adaptera le système d'activation à distance adéquate au dispositif selon l'invention.

L'invention concerne donc un dispositif rechargeable de pulvérisation d'un actif comprenant : (a) un réservoir, (b) un corps de nébulisation contenant un mécanisme de pulvérisation piézo-électrique, caractérisé en ce que ledit réservoir est une cartouche contenant au moins un actif, une mèche et un joint assurant l'étanchéité entre le ledit réservoir et le corps de nébulisation du dispositif.

Plus précisément, l'invention concerne un dispositif rechargeable de pulvérisation d'un actif comprenant :
(a) un réservoir amovible contenant une mèche et au moins un actif,
(b) un corps de nébulisation contenant un mécanisme de pulvérisation piézoélectrique,
(c) un joint assurant l'étanchéité entre ledit réservoir et ledit corps de nébulisation,
   ledit corps de nébulisation étant équipé d'un système d'orientation du mécanisme de pulvérisation piézoélectrique.

Le dispositif selon l'invention est caractérisé en ce que le mécanisme de pulvérisation piézoélectrique comprend une pastille piézoélectrique en contact avec l'actif, ladite pastille vibrant à une fréquence comprise entre 75 et 190 kHz et est recouverte d'une membrane perforée dont les dimensions des perforations sont comprises entre 1 et 40 µm.

Le dispositif selon l'invention est caractérisé en ce que la pastille piézoélectrique est en contact avec une mèche dont l'extrémité est plane ou hémisphérique.

Le dispositif selon l'invention est caractérisé en ce que l'actif est un actif insecticide, répulsif, anti-douleur ou apaisant et représente 0,01 % à 100 % en masse d'une composition liquide.

L'invention concerne donc un dispositif rechargeable de pulvérisation comprenant : (a) un réservoir contenant au moins un actif, (b) un mécanisme de pulvérisation piézo-électrique comprenant un élément piézoélectrique piloté par une carte électronique (c) caractérisé en ce que ledit réservoir comprend une ouverture de distribution par laquelle une mèche permet de vectoriser l'actif vers l'élément piézo-électrique quel que soit le sens d'utilisation du dispositif. L'étanchéité de l'ensemble est assurée par un système de joint entre le réservoir et le corps de nébulisation du dispositif, choisi pour permettre le changement de réservoir ou cartouche de recharge.

L'invention concerne également l'utilisation d'un dispositif rechargeable de pulvérisation d'un actif comprenant un réservoir contenant au moins ledit actif, et un mécanisme de pulvérisation piézo-électrique, caractérisé en ce que le dispositif est destiné à être fixé sur le sujet à traiter ou à protéger.

L'utilisation du dispositif est caractérisée en ce que le dispositif est utilisable de façon multidirectionnelle et indépendamment des mouvements du sujet.

L'utilisation du dispositif est également caractérisée en ce que le dispositif permet de pulvériser l'actif de façon localisée sur une zone cible du sujet.

L'utilisation du dispositif est caractérisée en ce que la composition liquide contenant l'actif est pulvérisée sous forme de particules de diamètre moyen compris entre 1µm et 40µm.

L'utilisation du dispositif est caractérisée en ce que la pulvérisation a pour cible la sphère Otho-Rhino-Laryngée du sujet pour inhalation ou une zone du corps du sujet à traiter ou à protéger.

L'invention concerne donc l'utilisation d'un dispositif équipé d'un mécanisme de pulvérisation piézo-électrique permettant de pulvériser de façon contrôlée et à distance ledit actif.

Les figures 1 à 6 représentent un exemple de dispositif selon l'invention, sans en limiter la forme.
[Fig.1] représente un exemple de dispositif complet selon l'invention constitué des deux parties principales, à savoir, le corps du dispositif constituant le corps de nébulisation (1) et le réservoir (2) emboité au sein du corps de nébulisation (1)
[Fig.2] représente le réservoir (2) constitué de la partie cartouche (3) contenant l'actif ou la composition comprenant l'actif, au sein duquel est fixée une mèche (4) à extrémité plane. Un joint (5) permet d'assurer l'étanchéité entre le réservoir et le corps de nébulisation lorsque le réservoir est en place au sein du dispositif.
[Fig.3] représente une alternative au réservoir (2) constitué de la partie cartouche (3) contenant l'actif ou la composition comprenant l'actif, au sein duquel est fixée une autre variante de mèche (4') présentant une extrémité arrondie, hémisphérique.
[Fig.4] et [Fig.5] représentent le réservoir avec la pastille piézoélectrique (6) en place telle qu'elle est disposée dans l'élément du corps de nébulisation.
[Fig.4] représente le cas où la cellule piézoélectrique (6) est placée sur une mèche à extrémité plane (4).
[Fig.5] représente le cas où la cellule piézoélectrique (6) est placée sur une mèche à extrémité hémisphérique (4') permettant d'orienter la cellule pour diriger la pulvérisation dans une direction choisie.
[Fig.6] représente un agrandissement du système d'orientation de la pastille piézoélectrique lorsque celle-ci est en contact avec l'actif via une mèche hémisphérique. Dans ce mode particulier, la pastille piézoélectrique est enchâssée dans un système basculant permettant de choisir une orientation à donner à la pastille piézoélectrique dirigeant ainsi la pulvérisation dans la direction souhaitée. Le système basculant est un système de rotule.
[Fig.7] représente le système d'orientation de la pastille piézoélectrique et notamment le détail du mécanisme de type rotule (7) constitué d'une partie fixe (8) et d'une partie mobile (8') enchâssée dans ladite partie fixe (8).

La présente invention est illustrée au moyen des exemples non exhaustifs et non limitatifs suivants.

### Exemple 1 : Exemple de fonctionnement d'un dispositif selon l'invention fixé sur un bracelet anti-moustique

On a réalisé un prototype de dispositif pour la diffusion de matière active anti-moustiques. Le mécanisme de nébulisation est une pastille piézoélectrique. Le dispositif est constitué par l'ensemble comprenant :
- un boîtier hémisphérique en polypropylène de 4 cm de diamètre et de 2 cm de hauteur,
- une solution alcoolique comportant une huile essentielle de lavandin qui représente 5% en masse, contenue dans un réservoir cylindrique en polypropylène de 3 mL de volume (diamètre 3 cm, hauteur 0,44 cm), le réservoir est pourvu d'une buse de sortie,
- une céramique piézoélectrique (PZT4 SMMOD10F190, Steminc) en contact avec la solution permettant de la nébuliser. La pastille piézoélectrique de forme torique (16 mm de diamètre externe, 3 mm de hauteur) est recouverte d'une membrane perforée (dimensions des perforations 3-20 µm sur une zone de 7 mm de diamètre). La pastille vibre à une fréquence comprise entre 110 et 190 kHz),
- une carte électronique de commande permettant d'activer manuellement la pastille piézoélectrique à l'aide d'un bouton poussoir permettant d'activer la pulvérisation, situé au centre de l'hémisphère du boîtier,
- une batterie alimentant le dispositif (29 x 19 x 5 mm) de 3.7V, 300 mAh et de puissance 1.11 Wh,
- un orifice de remplissage situé sur le boitier, et muni d'un bouchon flexible en silicone pour permettre le remplissage du réservoir en liquide actif,
- un connecteur muni d'un port USB permet le rechargement de la batterie,
- l'ensemble du dispositif qui vient d'être décrit est fixé sur un bracelet en nylon muni d'un moyen de fermeture de type collier-boucle comme du « velcro » ou « scratch » par exemple.

Ce dispositif est conçu pour qu'en sortie de buse, se constitue un brouillard de matière active qui diffuse autour du sujet et protège ainsi le sujet contre les piqûres de moustiques. La carte du circuit électronique a été programmée afin de permettre l'activation de la pastille durant 15 secondes, pour un volume nébulisé d'environ 55 µL. L'autonomie de la batterie permet de déclencher environ 150 activations avant rechargement total.

### Exemple 2 : Dispositif de diffusion d'actif apaisant

On a réalisé un prototype de dispositif pour la diffusion d'une composition apaisante pour l'homme afin de diminuer le stress. Le dispositif est constitué par l'ensemble comprenant :
- un boîtier de la forme d'un pavé de 4 cm de largeur, 3,5 cm de hauteur et de 1,5 cm de profondeur, sur lequel une excroissance est présente afin d'y loger la pastille piézoélectrique, ainsi qu'une gorge à l'intérieure de laquelle peut se loger un joint.
- une solution à base d'huile essentielle de valériane, mandarine et camomille aux propriétés apaisante (1/3, 1/3, 1/3), diluée dans de l'éthanol à hauteur de 10% contenue dans un réservoir cylindrique en verre de 1,5 mL de volume (diamètre 1,1 cm, hauteur 3 cm), le réservoir est pourvu d'un orifice de sortie,
- une mèche en cellulose de 6 mm de diamètre et 3,5 cm de hauteur, présentant une extrémité de forme hémisphérique, dont le rôle est d'acheminer le mélange d'huiles essentielles du réservoir vers la pastille piézoélectrique,
- un joint torique en caoutchouc nitrile de 11 mm permettant d'assurer l'étanchéité entre le réservoir et le boitier hémisphérique
- une céramique piézoélectrique (PZT4 SMMOD10F190, Steminc) en contact avec la solution permettant de la nébuliser via la mèche hémisphérique. La pastille piézoélectrique de forme torique (16 mm de diamètre externe, 3 mm de hauteur) est recouverte d'une membrane perforée (dimensions des perforations 1-10 µm sur une zone de 4 mm de diamètre). La pastille vibre à une fréquence de 110 kHz),
- une carte électronique de commande permettant d'activer manuellement à distance le pilotage du système piézoélectrique à l'aide d'une télécommande permettant d'activer la pulvérisation, situé au centre de l'hémisphère du boîtier,
- une batterie alimentant le dispositif (29 x 19 x 5 mm) de 3.7V, 300 mAh et de puissance 1.11 Wh,
- un connecteur muni d'un port USB permet le rechargement de la batterie,
- l'ensemble du dispositif qui vient d'être décrit est fixé sur un bracelet en nylon muni d'un moyen de fermeture de type boucle,

Ce dispositif est conçu et placé au bras de l'homme qui pourra adapter son orientation vers la sphère ORL dans une orientation telle qu'en sortie de buse, se constitue un brouillard de matière active qui est dirigé vers la sphère ORL du sujet. La carte du circuit électronique a été programmée afin de permettre l'activation de la pastille durant 10 secondes, pour un volume nébulisé d'environ 38 µL. L'autonomie de la batterie permet de déclencher environ 200 activations avant rechargement total.

## Revendications

1. Dispositif rechargeable de pulvérisation d'un actif comprenant :
a. un réservoir (2) amovible contenant une mèche et au moins un actif,
b. un corps de nébulisation (1) contenant un mécanisme de pulvérisation piézoélectrique,
c. un joint (5) assurant l'étanchéité entre ledit réservoir (2) et ledit corps de nébulisation (1),
**caractérisé en ce que** ledit corps de nébulisation (1) est équipé d'un système d'orientation (7) du mécanisme de pulvérisation piézoélectrique.

2. Dispositif selon la revendication 1 **caractérisé en ce que** le mécanisme de pulvérisation piézoélectrique comprend une pastille piézoélectrique (6) en contact avec l'actif, ladite pastille vibrant à une fréquence comprise entre 75 et 190 kHz et est recouverte d'une membrane perforée dont les dimensions des perforations sont comprises entre 1 et 40 µm.

3. Dispositif selon la revendication 2 **caractérisé en ce que** la pastille piézoélectrique (6) est en contact avec une mèche (4) dont l'extrémité est plane.

4. Dispositif selon la revendication 2 **caractérisé en ce que** la pastille piézoélectrique (6) est en contact avec une mèche (4') dont l'extrémité est hémisphérique.

5. Dispositif selon l'une des revendications 1 à 4 **caractérisé en ce que** l'actif est un actif insecticide, répulsif, anti-douleur, antibactérien, antiseptique ou apaisant.

6. Utilisation d'un dispositif rechargeable de pulvérisation d'un actif selon la revendication 1, **caractérisée en ce que** le dispositif est fixé sur un support choisi parmi une ceinture, un harnais un patch, un bracelet, le support étant apte à être porté par un sujet.

7. Utilisation selon la revendication 6 **caractérisée en ce que** le dispositif est utilisable de façon multidirectionnelle et indépendamment des mouvements du sujet.

8. Utilisation selon la revendication 6 **caractérisée en ce que** le dispositif permet de pulvériser l'actif de façon localisée sur une zone cible du sujet à protéger ou à traiter.

9. Utilisation selon l'une des revendications 6 à 8 **caractérisée en ce que** le dispositif équipé d'un mécanisme de pulvérisation piézo-électrique permet de pulvériser de façon contrôlée et à distance l'actif.

10. Utilisation selon l'une des revendications 6 à 9 **caractérisée en ce que** la pulvérisation a pour cible une zone du corps du sujet à traiter ou à protéger.

## Patentansprüche

1. Nachfüllbare Wirkstoffzerstäubungsvorrichtung, umfassend:
a. einen abnehmbaren Behälter (2), der einen Docht und mindestens einen Wirkstoff enthält,
b. einen Vernebelungskörper (1), der einen piezoelektrischen Zerstäubungsmechanismus enthält,
c. eine Dichtung (5), die die Dichtheit zwischen dem Behälter (2) und dem Vernebelungskörper (1) gewährleistet,
**dadurch gekennzeichnet, dass** der Vernebelungskörper (1) mit einem Ausrichtungssystem (7) des piezoelektrischen Zerstäubungsmechanismus ausgestattet ist.

2. Vorrichtung nach Anspruch 1, **dadurch gekennzeichnet, dass** der piezoelektrische Zerstäubungsmechanismus ein piezoelektrisches Plättchen (6) in Kontakt mit dem Wirkstoff umfasst, wobei das Plättchen mit einer Frequenz zwischen 75 und 190 kHz schwingt und mit einer perforierten Membran bedeckt ist, deren Perforationsabmessungen zwischen 1 und 40 µm betragen.

3. Vorrichtung nach Anspruch 2, **dadurch gekennzeichnet, dass** das piezoelektrische Plättchen (6) mit einem Docht (4) in Kontakt ist, dessen Ende eben ist.

4. Vorrichtung nach Anspruch 2, **dadurch gekennzeichnet, dass** das piezoelektrische Plättchen (6) mit einem Docht (4) in Kontakt ist, dessen Ende halbkugelförmig ist.

5. Vorrichtung nach einem der Ansprüche 1 bis 4,
**dadurch gekennzeichnet, dass** der Wirkstoff ein Insektizid-, Abwehr-, Schmerz-, antibakterieller, antiseptischer oder beruhigender Wirkstoff ist.

6. Verwendung einer nachfüllbaren Wirkstoffzerstäubungsvorrichtung nach Anspruch 1, **dadurch gekennzeichnet, dass** die Vorrichtung an einem Träger befestigt ist, der aus einem Gürtel, einem Gurt, einem Pflaster, einem Armband ausgewählt ist, wobei der Träger geeignet ist, um von einem Subjekt getragen zu werden.

7. Verwendung nach Anspruch 6, **dadurch gekennzeichnet, dass** die Vorrichtung mehrdirektional und unabhängig von den Bewegungen des Subjekts verwendbar ist.

8. Verwendung nach Anspruch 6, **dadurch gekennzeichnet, dass** die Vorrichtung ermöglicht, den Wirkstoff auf einem zu schützenden oder zu behandelnden Zielbereich des Subjekts lokalisiert zu zerstäuben.

9. Verwendung nach einem der Ansprüche 6 bis 8,
**dadurch gekennzeichnet, dass** die mit einem piezoelektrischen Zerstäubungsmechanismus ausgestattete Vorrichtung es ermöglicht, den Wirkstoff gesteuert und in einem Abstand zu zerstäuben.

10. Verwendung nach einem der Ansprüche 6 bis 9,
**dadurch gekennzeichnet, dass** das Zerstäuben einen zu behandelnden oder zu schützenden Bereich des Körpers des Subjekts zum Ziel hat.

## Claims

1. A refillable device for spraying an active substance, comprising:
a. a removable reservoir (2) containing a wick and at least one active substance,
b. a nebulizing body (1) containing a piezoelectric spraying mechanism,
c. a seal (5) ensuring the tightness between said reservoir (2) and said nebulizing body (1), wherein said nebulizing body (1) is equipped with an orientation system (7) of the piezoelectric spraying mechanism.

2. The refillable device according to claim 1, wherein the piezoelectric spraying mechanism comprises a piezoelectric pad (6) which is in contact with the active substance, said pad vibrating at a frequency of between 75 and 190 kHz, and is covered with a perforated membrane, of which the perforation dimensions are between 1 and 40 µm.

3. The refillable device according to claim 2, wherein the piezoelectric pad (6) is in contact with a wick (4), the end of which is planar.

4. The refillable device according to claim 2, wherein the piezoelectric pad (6) is in contact with a wick (4'), the end of which is hemispherical.

5. The refillable device according to any one of claims 1 to 4, wherein the active substance is an insecticidal, repellant, painkiller, soothing, antibacterial or antiseptic.

6. A use of a refillable device for spraying an active substance according to claim 1, wherein the device is fixed to a support selected from a belt, a harness, a patch, or a bracelet, the support being suitable for being worn by a subject.

7. The use according to claim 6, wherein the device can be used multi-directionally and independently of the movements of the subject.

8. The use according to claim 6, wherein the device makes it possible to spray the active substance in a localized manner, on a target zone of the subject to be protected or to be treated.

9. The use according to any one of claims 6 to 8, wherein the device equipped with a piezoelectric spraying mechanism makes it possible to spray the active substance in a controlled and remote manner.

10. The use according to any one of claims 6 to 9, wherein the spraying targets a zone of the body of the subject to be treated or to be protected.
